# EUROPEAN PATENT SPECIFICATION

(11) **EP 2 465 820 B1**
(45) Date of publication and mention of the grant of the patent: **10.02.2016**
(21) Application number: 11192203.5
(22) Date of filing: 06.12.2011
(51) Int. Cl.: C01B 33/38, C01B 33/40

(54) **Method for obtaining smectites from clay having low levels of smectites**
Verfahren zur Herstellung von Smektiten aus Lehm mit geringem Smektit-Anteil
Procédé permettant d'obtenir des smectites à partir d'argile à faibles teneurs en smectites

(30) Priority: 15.12.2010 LV 100170
(43) Date of publication of application: 20.06.2012
(73) Proprietor: Latvijas Universitate, 1586 Riga (LV)
(72) Inventor: Kostjukovs, Juris, LV-1003 Riga (LV); Actins, Andris, LV-2169 Salaspils (LV); Sarcevica, Inese, LV-3708 Auce (LV); Karasa, Julija, LV-3407 Liepaja (LV)
(74) Representative: Fortuna, Aleksandra

(56) References cited:
- EP-A1- 1 985 586
- EP-A2- 0 718 237
- WO-A1-2007/003402
- US-A- 5 266 538

## Description

### Technical Field

The invention relates to the field of smectites production, more particularly to obtaining smectites from smectites containing clay and can be used for manufacturing of organoclay and other kind of adsorbents.

### Background Art

Smectites is a group of minerals which i.a. includes montmorillonite and saponite. Smectites are widely used as adsorbents in medicine, pharmacy, agriculture, metallurgy and other fields.

Typically smectites are obtained from smectite containing clays. Smectite clays formed from volcanic ash are commonly known as bentonites. Organophilic bentonites or organoclay are widely used in many fields of industry as universal structure formers and oily medium hardeners. They are used in varnish and paint industry for certain consistency grease production, as well as plastics and rubber fillers and as binders in water-free forming compounds for precise casting production from aluminium and magnesium alloys. Organoclays are used also as fillers for leather colouring pigment concentrates, as highly effective additives for increasing the strength of cement stone, as structure formers in hydrocarbon-based drilling solutions, automobile manufacturing, metal working, as well in printing industry, perfumery and cosmetics.

The amount of smectites obtained from clays containing large amounts of smectite group minerals, e.g. 70-80%, is high. However, there are not a lot of clay deposits in the world, containing such large amounts of smectites. In turn, the amount of smectites obtained from clays in which content of smectites clay substance is less than 30-40% - is relatively small. Activation and enrichment of clays having low smectites content is a problem in many regions. Therefore, there exists a problem of ensuring the effective production of smectites from clay having low contents of smectites.

There are known several methods for obtaining smectites from clay having low contents of smectites. For instance, methods based on mechanical fractionation. These methods are not effective, because the size of particles of impurities is small and it is difficult to separate them from the clay particles, consequently part of smectites is being lost in the process, but the part obtained still contains undesirable impurities. Methods where smectites are obtained by evaporation of water are not effective due to large energy and time consumption.

There are known methods where organic compounds are added as coagulants (e.g. EP 0718237). Disadvantages of these methods are that the smectites are obtained with admixtures of said organic coagulants.

There is known a method for obtaining powdery bentonite (patent RU 2101258), including crushing, chemical activation by sodium salt in aqueous medium, wherein clay and water weight ratio is 1:1.35, and stirring the suspension obtained and drying in a spray drying tower. The main drawback of the method is that it could not be effectively used for obtaining smectites from clay having low contents of smectites, because the smectites obtained in the result of the implementation of the method contain rather large amount of ballast.

### Disclosure of Invention

The aim of the invention is to eliminate disadvantages of the prior art and to provide an effective method for obtaining smectites from clay having low contents of smectites, allowing relatively quick obtaining smectites without undesirable admixtures or with minimal content thereof.

The objective is achieved by the proposed method for obtaining smectites from clay having low contents of smectites including the following steps: mixing clay having low contents of smectites in activator - phosphate-aqueous solution or mixing clay having low contents of smectites with activator in water, the sedimentation of the resultant suspension, preferably so long to precipitate silica particles which are larger than one micron and the rest of the ballast (carbonates, feldspar, etc.); adding the coagulant - a saturated solution of hydrazine dihydrogen chloride and acetone in acidic medium (pH 2-4), to the suspension obtained; separation of the coagulated smectites from the solution potentially containing the activator and coagulant residues. The said separation is performed by filtration or centrifugation of the suspension coagulum, obtained in the previous step. Further the smectites obtained are washed with water and dried.

Activator - phosphate is selected from the group, containing pyrophosphates and polyphosphates. According to one embodiment, phosphate is sodium phosphate, chosen from the group containing: Na₄P₂O₇ and Na₅P₃O₁₀. The weight ratio of clay, water and activator is 1:10-20:0.01-0.1. The activation process is carried out at pH 8-9.

The composition of the easy to use coagulant (hereinafter - KOHIDRAC) is formed by mixing a saturated solution of hydrazine dihydrogen chloride with acetone. The weight ratio of saturated hydrazine dihydrogen chloride solution to acetone is from 1:2 to 1:3. Coagulation process is carried out at pH 3-4.

The proposed process allows to achieve the set objective due to adding the coagulant, comprising one or more imino group-containing compounds in acidic medium to the clay aqueous suspension and filtration of the activator coagulum after coagulation process has been completed. One or more imino group-containing compounds may be selected from the group, containing: dihydrazones (azines), phenyl hydrazones, diphenylamine-acetone condensation products.

The advantages of the proposed process compared to the prior art solutions, where smectites are produced by water evaporation (without coagulation process) is that the speed of smectites production process is 10-20 times larger. Compared to the methods where other organic matter is added as coagulant, the advantage of the proposed process is that the smectites obtained are free of undesirable impurities of organic coagulants.

### Examples of Implementation of Invention

### Example 1

200g of clay from Saltisku deposits is being added to 15 g of Na₄P₂O₇ and 4 L of water. Left for twenty-four hours, decanted, added 160 ml of solution KOHIDRAC, put down for 15 minutes, filtered, washed with 1 L of water, dried at temperature of 60°C. The smectite obtained - 43.3 g.

### Example 2

50 g of clay from Zanas deposits is being added to 5 g of sodium polyphosphate and 1 L of water. The mixture is left for twenty-four hours and is decanted. 40 ml of KOHIDRAC solution is added to the suspention, put down for 10 minutes. The product is then filtered and washed with 0.5 L of water, dried at temperature of 60°C. Dry mass of the product obtained - 14.5 g.

### Example 3

400 g of clay from Vadakste deposits is added to 40 g of Na₄P₂O₇ and 8 L of water. Put down for twenty-four hours and decanted. 230 ml of KOHIDRAC solution is added, put down for 20 minutes, then filtered and washed with 2.0 L of water, dried at 80°C temperature. Dry mass of the product obtained - 132.5 g.

### Example 4

30 g of clay from Pampalu deposits is added to 0.3 g of Na₅P₃O₁₀ and 0.2 L of water. Put down for twenty-four hours and decanted then 20 ml KOHIDRAC solution is added, put down for 10 min, filtered, washed and dried at 80°C temperature. Dry mass of the product obtained - 6.0 g.

### Comparative Example 5

30 g clay from Saltisku deposits is added to 3 g of sodium pirophosphate and 0.8 L water. Put down for twenty-four hours, decanted. As a result about ~0.8 L suspension is obtained. Coagulant is added, that is prepared as follows: mixing of 10 ml of saturated hydrazine dihydrogen chloride solution, 30 ml methyl ethyl ketone (2-butanone) and 50 ml water. Put down for 15 min, filtered, washed and dried.

### Comparative Example 6

The coagulant is added to the suspension (~0.8 1) described in Example 5. The coagulant used is prepared as follows: adding of 1 g phenylhydrazine to 20 ml of water, 40 ml of acetone or methyl ethyl ketone and 2 ml of concentrated hydrochloric acid. As a result clear yellow-brown solution is obtained. The solution is put down for 15 min, filtered, washed and dried.

### Comparative Example 7

The coagulant is added to the suspension (~0.81) described in Example 5. The coagulant is prepared as follows: 30 ml of acetone and 1 ml of concentrated hydrochloric acid is added to 30 ml of saturated hydrazine sulphate solution. Put down for 15 min, filtered, washed and dried.

### Comparative Example 8

The coagulant is added to the suspension (~0.81) described in Example 5. The coagulant is prepared as follows: 1 g of diphenylamine is added to 30 ml of acetone and 30 ml of concentrated hydrochloric acid. Put down for 15 min, filtered, washed and dried.

The coagulant compositions described in the Examples 5-8 in varying amounts cause coagulation (total dry mass of product obtained is greater than 6 g), but the main disadvantage of such coagulants is that they are adsorbed on the surface of the product and could not be fully washed out. In addition, methyl ethyl ketone and hydrazine sulfate has limited solubility in water. Whereas the coagulant compositions described in the Examples 1 to 4 allow obtaining smectites from clay having low contents of smectites relatively quickly without undesirable impurities or with the minimum content of them, as well as without the adsorption of the coagulant on the surface of the product.

## Claims

1. A method for obtaining smectites from clay having low contents of smectites, comprising the following steps:
(i) mixing of clay having low contents of smectites in activator aqueous solution or mixing of clay having low contents of smectites and activator in water, wherein the activator is a phosphate and weight ratio of clay, water and activator is 1:10-20:0.01-0.1,
(ii) sedimentation of the resultant suspension, preferably so long to precipitate silica particles which arc larger than one micron and the rest of the ballast,
(iii) addition to the resultant suspension of a saturated solution of hydrazine dihydrogen chloride and acetone in weight ratio from 1:2 to 1:3 being a coagulant in acidic medium,
(iv) separation of smectites from the solution, containing the potential activator and coagulant residues.

2. The method according to claim 1, wherein separation of smectites from the solution, containing the potential activator and coagulant residues is carried out by filtering or centrifugation of the coagulum obtained in previous step.

3. The method according to any one of the preceding claims, wherein after the filtering or centrifugation step smectites are washed with water and dried.

4. The method according to any preceding claims, wherein activator - phosphate is selected from the group consisting of: pyrophosphates and polyphosphates.

5. The method according to any preceding claims, wherein activator - phosphate is sodium phosphate, selected from the group consisting of: Na₄P₂O₇ and Na₅P₃O₁₀.

## Patentansprüche

1. Methode zur Herstellung von Smektiten aus Ton, die folgende Schritte umfasst:
(i) Mischen des Tons mit geringem Gehalt an Smektiten und einem Aktivator in wässriger Lösung oder Mischen des Tons mit geringem Gehalt an Smektiten und einem Aktivator in Wasser, wobei der Aktivator ein Phosphat ist und das Gewichtsverhältnis von Ton, Wasser und Aktivator von 1: 10-20: 0.01- 0,1 beträgt.
(ii) Absetzen der resultierenden Suspension, vorzugsweise so lange, um Teilchen, die größer als ein Mikrometer sind und den restlichen Ballast auszufällen;
(iii) Zugabe zur erhaltenen Suspension einer gesättigten Lösung von Hydrazin Dihydrogenchlorid und Aceton in einem Gewichtsverhältnis von 1:2 bis 1:3 als ein Koagulans in einem sauren Medium,
(iv) Trennung von Smektiten aus der Lösung, die den potentiellen Aktivator und Koagulationsmittelreste enthält.

2. Verfahren nach Anspruch 1, wobei die Trennung der Smektite von der Lösung, die den potentiellen Aktivator und die Koagulationsrückstände enthält, durch Filtrieren oder Zentrifugieren des aus dem vorgehenden Schritt resultierenden Koagulums erfolgt.

3. Verfahren nach einem der vorhergehenden Ansprüche, wobei nach dem Filter- oder Zentrifugierschritt die Smektite mit Wasser gewaschen und getrocknet werden.

4. Das Verfahren nach einem der vorhergehenden Ansprüche, bei dem ein Aktivator-Phosphat aus der Gruppe bestehend aus Pyrophosphaten und Polyphosphaten ausgewählt wird.

5. Das Verfahren nach einem der vorhergehenden Ansprüche, bei dem ein Aktivator-Phosphat ein Natriumphosphat ist, das aus der Gruppe mit folgender Zusammensetzung ausgewählt wird: Na₄P₂O₇ und Na₅P₃O₁₀.

## Revendications

1. Procédé d'obtention de smectites à partir d'argile à faibles teneurs en smectites, comprenant les étapes suivantes :
(i) mélange d'une argile à faibles teneurs en smectites dans une solution aqueuse d'activateur ou mélange d'une argile à faibles teneurs en smectites et d'un activateur dans de l'eau, dans lequel l'activateur est un phosphate et le rapport pondéral de l'argile, de l'eau et de l'activateur est de 1/10-20/0,01-0,1,
(ii) sédimentation de la suspension résultante, de préférence assez longtemps pour précipiter les particules qui sont plus grandes qu'un micromètre et le reste de la charge,
(iii) addition à la suspension résultante d'une solution saturée de dihydrogénochlorure d'hydrazine et d'acétone dans un rapport pondéral allant de 1/2 à 1/3 étant un coagulant dans un milieu acide,
(iv) séparation des smectites de la solution, contenant les résidus potentiels d'activateur et de coagulant.

2. Procédé selon la revendication 1, dans lequel la séparation des smectites de la solution, contenant les résidus potentiels d'activateur et de coagulant est effectuée par filtrage ou centrifugation du coagulum obtenu à l'étape précédente.

3. Procédé selon l'une quelconque des revendications précédentes, dans lequel, après les étapes de filtrage ou de centrifugation, les smectites sont lavées à l'eau et séchées.

4. Procédé selon l'une quelconque revendication précédente, dans lequel l'activateur - phosphate est choisi dans le groupe constitué de : pyrophosphates et polyphosphates.

5. Procédé selon l'une quelconque revendication précédente, dans lequel l'activateur - phosphate est du phosphate de sodium, choisi dans le groupe constitué de : Na₄P₂O₇ et Na₅P₃O₁₀,
